# EUROPÄISCHE PATENTSCHRIFT

(11) **EP 0 755 199 B1**
(45) Veröffentlichungstag und Bekanntmachung des Hinweises auf die Patenterteilung: **21.01.1998**
(21) Anmeldenummer: 95916641.4
(22) Anmeldetag: 12.04.1995
(51) Int. Cl.: A23N 7/04, B27L 1/00

(54) **VORRICHTUNG ZUM SCHÄLEN VON LÄNGLICHEN PFLANZLICHEN UND/ODER LANDWIRTSCHAFTLICHEN PRODUKTEN**
APPARATUS FOR PEELING OBLONG VEGETABLE AND/OR AGRICULTURAL PRODUCTS
DISPOSITIF PERMETTANT DE PELER DES PRODUITS VEGETAUX ET/OU AGRICOLES ALLONGES

(30) Priorität: 12.04.1994 DE 4412561
(43) Veröffentlichungstag der Anmeldung: 29.01.1997
(73) Patentinhaber: Protte, Christoph, 33129 Delbrück (DE); Hennemeier, Siegfried, 33154 Salzkotten (DE)
(72) Erfinder: Protte, Christoph, 33129 Delbrück (DE); Hennemeier, Siegfried, 33154 Salzkotten (DE)
(74) Vertreter: Weber, Joachim, Dr.
(86) Internationale Anmeldenummer: EP9501366
(87) Internationale Veröffentlichungsnummer: WO9527410

(56) Entgegenhaltungen:
- DE-U- 7 816 311
- DE-U- 9 312 718
- US-A- 5 148 843

## Beschreibung

Die Erfindung betrifft eine Vorrichtung zum Schälen von länglichen pflanzlichen und/oder landwirtschaftlichen Produkten, insbesondere von Spargel, Gurken, Karotten, Rüben, Schwarzwurzeln etc. mit zumindest zwei Walzenpaaren zum Transport des Produktes und einer zwischen den Walzenpaaren angeordneten Messereinheit.

Der Stand der Technik zeigt vielfältigste Ausgestaltungen von Vorrichtungen zum Schälen von Spargel. Ganz generell erfordert die Bearbeitung von Spargel ein sorgfältiges Schälen des gesamten Umfangs des Spargels, um die harte, faserige äußere Schicht zu entfernen. Es muß somit gewährleistet werden, daß der Spargel an seinem gesamten Umfang gleichmäßig geschält wird.

Ein weiterer, wesentlicher Aspekt liegt darin, daß der relativ weiche, empfindliche Kopf des Spargels nicht geschält werden darf, da der Kopf beschädigt wäre und da zum anderen im Bereich des Kopfes keine harte Außenschicht vorhanden ist.

Bei der Bearbeitung von Spargel ergeben sich erhebliche Schwierigkeiten daraus, daß die einzelnen Spargelstangen unterschiedlich lang und dick sind und im übrigen nur in den wenigsten Fällen vollständig gerade gewachsen sind. Bearbeitungsvorrichtungen müssen somit in der Lage sein, auch krumme und größere bzw. kleinere Spargelstangen zuverlässig zu bearbeiten.

Die DE-OS 28 13 083 beschreibt eine Anlage zum Verarbeiten von Spargel, bei welcher der Spargel durch zwei voneinander beabstandete Transportwalzenpaare transportiert wird. Zwischen den beiden Transportwalzenpaaren, welche starr ausgebildet sind und zu einer Formung des Spargels beitragen, ist eine Messereinheit angeordnet, welche in Form eines keilförmigen Rohres ausgebildet ist. Beim Durchschieben des Spargels durch die Messereinheit wird von seinem Umfang eine Schicht abgeschält. Nachteilig bei dieser Vorrichtung ist, daß die starren Transportwalzen bei geringsten Fehlorientierungen des Spargels diesen beschädigen. Es können weder krumme noch dickere oder dünnere Spargel verarbeitet werden. Auch die Messereinheit ist so ausgebildet, daß eine Anpassung an unterschiedliche Geometrien der einzelnen Spargelstange nicht möglich ist. Es besteht somit die Gefahr, daß zu dünne Spargel überhaupt nicht und zu dicke Spargel übermäßig stark geschält werden.

Eine weitere Vorrichtung zum Schälen von Spargel ist aus der DE-OS 22 35 104 vorbekannt. Die Spargelstange wird mehreren aufeinanderfolgend angeordneten Messereinheiten zugeführt, wobei die Messereinheiten jeweils ein Schälmesserpaar aufweisen. Die beiden Schälmesser sind an Messerträgern gelagert, welche scherenartig geöffnet oder geschlossen werden können. Die einzelnen Spargel werden mittels Kaltevorrichtungen gegriffen und transportiert, welche an Transportmitteln befestigt sind. Eine zuverlässige, beschädigungsfreie Bearbeitung von unterschiedlich dimensionierten Spargelstangen ist nicht möglich, da die Transportmittel derartige Spargelstangen nicht zuverlässig greifen und transportieren können.

Das DE-U1 78 16 311 zeigt eine weitere Ausgestaltung einer Spargelschälmaschine, bei welcher die Spargelstange mittels zweier Transportradpaare an Messern vorbeigeleitet wird. Die Messereinheit umschließt den gesamten Umfang des Spargels und dient zum Schälen des Spargels bei einem einzigen Durchlauf durch die Messereinheit. Auch hierbei erweist es sich als nachteilig, daß eine Anpassung an unterschiedliche dimensionierte Spargel nicht möglich ist. Weiterhin sind die Messer so ausgebildet und angeordnet, daß sie binnen kürzester Zeit von den Spargelschalen zugesetzt werden, so daß die Funktionssicherheit der Anlage nicht gegeben ist.

Der Erfindung liegt die Aufgabe zugrunde, eine gattungsgemäße Vorrichtung zum Schälen von länglichen pflanzlichen und/oder landwirtschaftlichen Produkten zu schaffen, welche bei einfachem Aufbau und einfacher, funktionssicherer Anwendbarkeit ohne Beschädigung der Produkte eine zuverlässige Bearbeitung auch unterschiedlich dimensionierter Produkte ermöglicht.

Erfindungsgemäß wird die Aufgabe dadurch gelöst, daß der Antrieb jedes Transportwalzenpaares mit einem Freilauf versehen ist.

Im nachfolgenden wird die Erfindung insbesondere im Hinblick auf das Schälen von Spargelstangen beschrieben, es versteht sich jedoch, daß diese Beschreibung nicht einschränkend ist.

Die erfindungsgemäße Vorrichtung zeichnet sich durch eine Reihe erheblicher Vorteile aus. Durch den erfindungsgemäß vorgesehenen Freilauf wird vollständig verhindert, daß auf die Spargelstange Zug- oder Druckkräfte aufgebracht werden, die zu einer Beschädigung führen können. Da Spargel vom Kopf bis zum Ende einen zunehmenden Durchmesser aufweisen, ergeben sich zwangsläufig bei den Walzenpaaren vor und hinter der Messereinheit unterschiedliche Umfangsgeschwindigkeiten. Diese würden, wäre der Antrieb der Transportwalzenpaare nicht mit einem Freilauf versehen, zu einer unterschiedlichen Fördergeschwindigkeit des Spargels führen. Durch den erfindungsgemäß vorgesehenen Freilauf ist es möglich, das jeweils langsamere Transportwalzenpaar von seinem Antrieb zu entkoppeln und in eine schnellere Drehbewegung zu versetzen. Das Transportwalzenpaar, welches den Spargel an seiner dünneren Stelle greift, führt damit zu einer Beschleunigung des jeweils anderen Transportwalzenpaares. Hierdurch wird verhindert, daß auf den Spargel Zugkräfte aufgebracht werden, welche zu seiner Beschädigung, insbesondere zu einem Abreißen des Kopfes führen würden.

In einer günstigen Weiterbildung der Erfindung ist vorgesehen, daß jede Transportwalze mit einem eigenen Freilauf versehen ist. Hierdurch können insbesondere Unterschiede, welche durch gebogene oder krumme Spargel hervorgerufen werden, ausgeglichen werden.

Die beiden Transportwalzen jedes Walzenpaares werden bevorzugterweise mit derselben Drehgeschwindigkeit angetrieben. Besonders günstig ist es, wenn sämtliche Transportwalzen aller in der Vorrichtung vorgesehenen Walzenpaare mit derselben Drehgeschwindigkeit angetrieben werden.

Um eine vollständige, gleichmäßige Bearbeitung des Spargels zu gewährleisten, kann es günstig sein, wenn mehrere Transportwalzenpaare mit zwischen diesen angeordneten Messereinheiten vorgesehen sind. So ist es beispielsweise möglich, acht Messereinheiten und neun Transportwalzenpaare zu verwenden.

Die Drehachsen der Transportwalzen sind bevorzugterweise jeweils parallel zueinander angeordnet. Hieraus ergibt sich ein besonders einfacher Aufbau der gesamten Vorrichtung.

Erfindungsgemäß ist vorgesehen, daß die Transportwalzen aus einem weichen, elastischen Material gefertigt sind. Dieses Material kann beispielsweise Schaumgummi oder ähnliches sein. Hierdurch wird eine schonende Behandlung des Spargels sichergestellt, wobei unterschiedlichst dimensionierte Spargel bearbeitet werden können. Die Transportwalzen weisen beispielsweise jeweils einen Durchmesser von 60 mm auf und sind so angeordnet, daß die beiden Transportwalzen eines Walzenpaares nur einen geringen Abstand zueinander aufweisen. Durch die elastische Verformbarkeit des Walzen-Materials wird ein zuverlässiges Transportieren und Greifen des Spargels sichergestellt.

Die erfindungsgemäß vorgesehene Messereinheit weist bevorzugterweise jeweils zwei im wesentlichen gerade, an ihrem gegenseitigen Abstand einstellbare Messer auf. Durch die gerade Ausgestaltung der Messer ergibt sich zum einen eine einfache, kostengünstige Herstellbarkeit, zum anderen sind die Messer nicht auf bestimmte Abmessungen der Spargel festgelegt.

Die Messer sind bevorzugterweise auf zwei gegenüberliegenden, scherenartig bewegbaren Messerträgern gelagert, so daß eine Einstellung und Anpassung an unterschiedlich dicke, abzuschälende Spargelbereiche möglich ist. Durch eine winkelmäßige Versetzung aufeinanderfolgender Messer wird der Spargel an seinem gesamten Umfang bearbeitet.

Die Messerträger sind jeweils mit einer Betätigungseinheit versehen, welche pneumatisch betätigbar sein kann. In günstiger Ausbildung der Erfindung kann die Betätigungseinheit einen ersten Antrieb zum Öffnen/Schließen des Messerträgerpaares und einen zweiten, unabhängigen Antrieb zur Einstellung der Schnittkraft umfassen. Der zweite Antrieb kann als wegunabhängige Feder ausgebildet sein. Auch diese kann in Form eines pneumatischen Zylinders ausgestaltet werden. Auf diese Weise wird gewährleistet, daß stets ein ausreichender Schnittdruck an den Messern angelegt wird und daß das Öffnen bzw. Schließen unabhängig von der Aufbringung des Schnittdruckes erfolgt. Auch durch diese Maßnahme wird gewährleistet, daß unterschiedlich dimensionierte Spargel gleichmäßig bearbeitet werden können.

Besonders günstig ist es, wenn in Durchlaufrichtung des Spargels vor der Messereinheit eine Lichtschranke angeordnet ist, welche Signale zum Öffnen/Schließen des Messerträgerpaares abgibt. In Abhängigkeit von der gewählten Durchlaufgeschwindigkeit und der gewünschten Signalverarbeitung erfolgt das Schließen des Messerträgerpaares zu einem Zeitpunkt, in welchem der Kopf des Spargels das Messerträgerpaar bereits passiert hat. Hierdurch wird vermieden, daß der Spargel im Bereich seines Kopfes geschält wird.

Um eine Beeinträchtigung nachfolgender Transportwalzen oder Messereinheiten durch die abgeschälten Spargelschalen zu vermeiden, ist es günstig, wenn, in Durchlaufrichtung des Spargels, nach jeder Messereinheit eine mit einer Ausnehmung zur Durchführung des Spargels versehene Prallplatte angeordnet ist. Die Ausnehmung kann elastische Abstreifelemente aufweisen, welche gegen den Spargel anliegen. Hierdurch werden die Schalen in zuverlässiger Weise zurückgehalten bzw. abgeführt.

Um die Messer vor einem Zusetzen zu schützen, ist es besonders günstig, wenn die Messereinheit mit einer Spüleinrichtung versehen ist. Diese kann bevorzugterweise zumindest eine an dem Messerträger angeordnete, das Messer in dessen Längsrichtung beaufschlagte Düse umfassen, durch welche Wasser zugeführt werden kann. Somit werden Schalen, welche an dem Messer anhaften, in zuverlässiger Weise von dem Messer abgespült. Auch hierbei ist es günstig, wenn das Messer gerade ausgebildet ist.

Im folgenden wird die Erfindung anhand eines Ausführungsbeispieles in Verbindung mit der Zeichnung beschrieben. Dabei zeigt:
- Fig. 1: eine schematische Teil-Seitenansicht, teils im Schnitt, einer Bearbeitungsstation der erfindungsgemäßen Vorrichtung,
- Fig. 2: eine schematische Draufsicht auf zwei benachbarte Transportwalzenpaare,
- Fig. 3: eine Ansicht einer erfindungsgemäßen Messereinheit,
- Fig. 4: eine Seitenansicht der in Fig. 3 dargestellten Messereinheit,
- Fig. 5: eine perspektivische Teilansicht der erfindungsgemäßen Vorrichtung,
- Fig. 6: eine Darstellung der Anordnung der Messerachsen, und
- Fig. 7: eine weitere Ausgestaltungsvariante der Messereinheiten, in ähnlicher Darstellung wie Fig. 1.

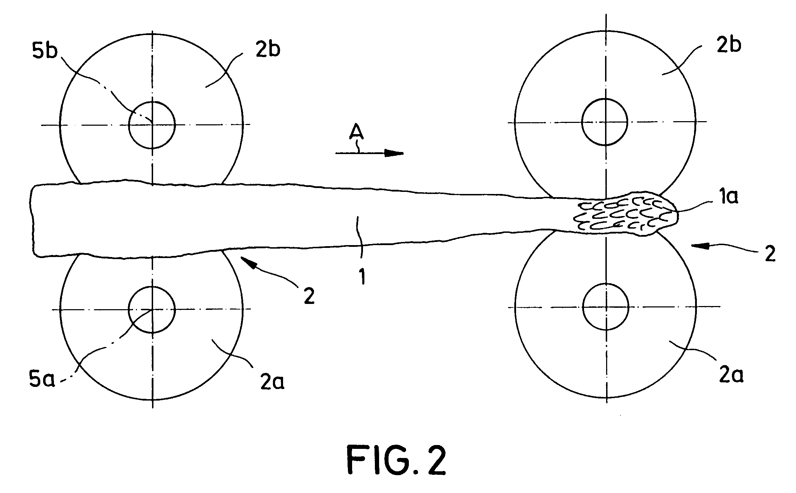

Die Fig. 2 zeigt in schematischer Darstellung einen Spargel 1 mit einem Kopf 1a. Der Spargel 1 ist von zwei in Durchlaufrichtung nacheinander angeordneten Walzenpaaren 2 gegriffen, jedes Walzenpaar 2 besteht aus zwei Transportwalzen 2a, 2b. Die Durchlaufrichtung des Spargels ist durch den Pfeil A angegeben. Aus der Abbildung 2 ist ersichtlich, daß der Spargel 1 zu seiner Bearbeitung gleichzeitig von zwei Transportwalzenpaaren 2 gegriffen und gehalten werden kann.

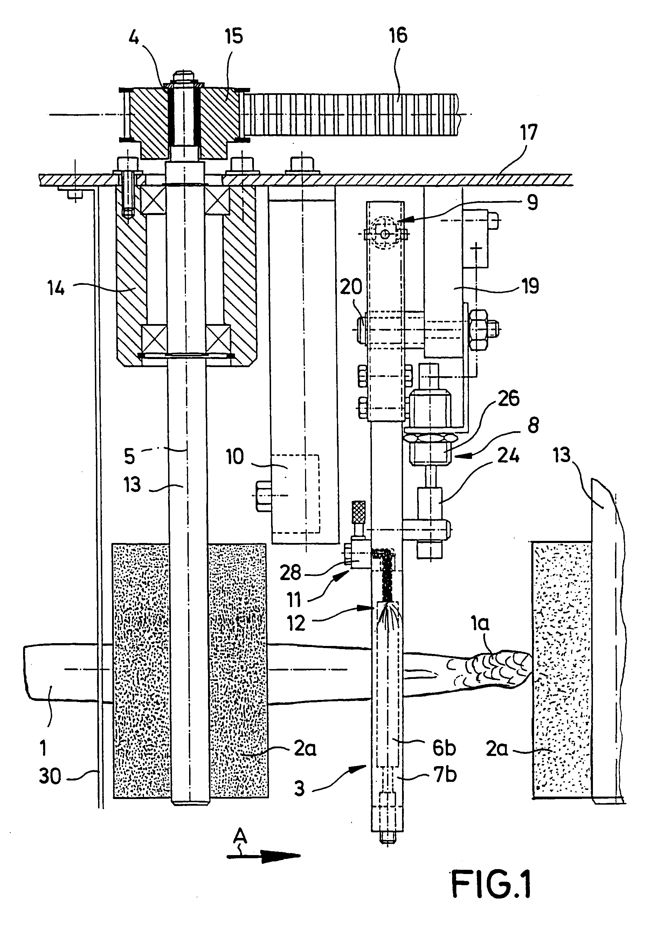

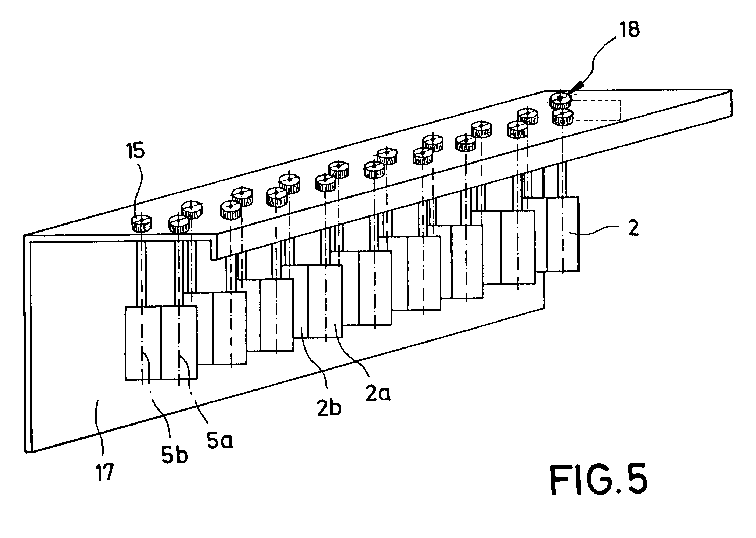

Fig. 1 zeigt eine Bearbeitungsstation der erfindungsgemäßen Vorrichtung in schematischer Seitenansicht. Die Transportwalze 2a ist aus einem schaumstoffartigen Material gefertigt und mit einer Welle 13 versehen, die in einem Lagerbock 14 drehbar gelagert ist. Am oberen Ende der Welle 13 ist ein Freilauf 4 angeordnet, auf welchem ein Antriebsrad 15 sitzt. Das Antriebsrad 15 ist so ausgebildet, daß es durch einen Zahnriemen 16 formschlüssig umschlingbar und damit antreibbar ist. Die Fig. 5 zeigt die Anordnung mehrerer Walzenpaare 2 an einem Gehäuse 17. Auf die Darstellung des Zahnriemens 16 wurde der Übersichtlichkeit halber verzichtet, auch wurden die einzelnen Transportwalzen 2 jeweils nur schema- tisiert dargestellt. Es ist jedoch zu erkennen, daß diese jeweils benachbart zueinander angeordnet sind, so daß sich ein relativ schmaler Walzenspalt ergibt, durch den der Spargel 1 durchführbar ist. Weiterhin ist in Fig. 5 ein Antrieb 18 in schematischer Weise dargestellt, welcher zum Antreiben des Zahnriemens 16 dient. Somit werden sämtliche Antriebsräder 15 und damit sämtliche Transportwalzen 2 mittels eines gemeinsamen Antriebs 18 über einen Zahnriemen 16 angetrieben, wobei sämtliche Walzen mit derselben Drehgeschwindigkeit um ihre Drehachsen 5a bzw. 5b angetrieben werden.

Wie in Fig. 1 gezeigt, ist, in Durchlaufrichtung, hinter dem Walzenpaar 2 jeweils eine Lichtschranke 10 angeordnet, welche Signale an eine im einzelnen nicht gezeigte Steuereinheit abgibt. Die Steuereinheit dient zum Öffnen bzw. Schließen einer nachfolgenden Messereinheit 3.

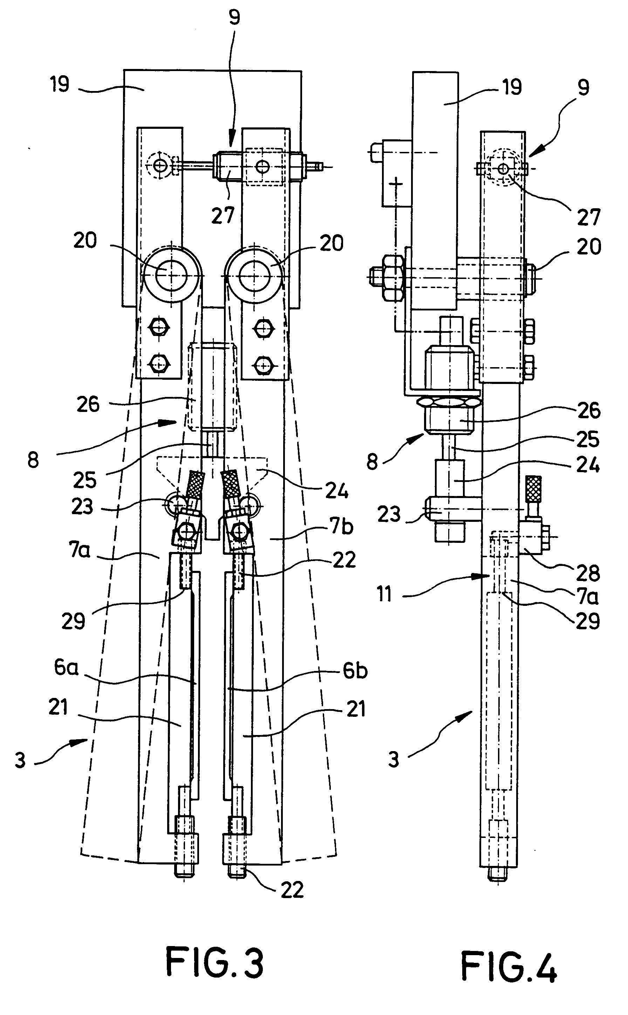

Die Messereinheit 3 ist insbesondere in den Fig. 3 und 4 dargestellt. Sie umfaßt einen Träger 19, an welchem zwei zueinander parallele Bolzen 20 befestigt sind. Auf diesen Bolzen 20 sind drehbar bzw. schwenkbar Messerträger 7a, 7b gelagert. Die Messerträger sind an ihrem unteren Endbereich an den einander zugewandten Seiten mit einer Ausnehmung 21 versehen. In der Ausnehmung 21 ist jeweils ein gerade ausgebildetes Messer 6a, 6b gelagert. Das Messer 6 weist an seinem oberen bzw. seinem unteren Ende einen Lagerzapfen 22 auf, welcher drehbar in dem Messerträger 7 angeordnet ist. Hierdurch kann das Messer 6 etwas verschwenkt werden, um sich der Geometrie des Spargels 1 anzupassen.

Die Fig. 3 zeigt weiterhin, daß jeder Messerträger 7 an seiner einen Seite mit einem Ansatz 23 versehen ist, welcher in Form eines Bolzens ausgebildet sein kann. Die beiden Ansätze 23 benachbarter Messerträger 7a, 7b können zum Öffnen der Messereinheit 3 mittels eines Keiles 24 auseinandergedrückt werden. Zu diesem Zwecke ist der Keil 24 über eine Kolbenstange 25 mit einer pneumatischen Kolben/Zylindereinheit verbunden. Durch Verschieben der Kolbenstange 25 wird die Messereinheit 3 geöffnet bzw. geschlossen. Die Einheit 26 bildet somit einen ersten Antrieb 8 der Messereinheit 3.

Am oberen Ende der Messerträger 7 ist ein zweiter Antrieb 9 angeordnet, welcher durch eine pneumatische Kolben/Zylindereinheit 27 gebildet wird. Diese wirkt als pneumatische Feder und dient, unabhängig von dem ersten Antrieb 8, zur Aufbringung einer ausreichenden Schnittkraft auf die Messer 6.

Die Fig. 1, 3 und 4 zeigen weiterhin, daß der obere Lagerzapfen 22 des Messers 6 hohl ausgebildet ist, so daß über einen Anschluß 28 Wasser zugeführt werden kann, um die Messer 6 von anhaftenden Schalen zu befreien. Das Aufsprühen des Wassers ist schematisch in Fig. 1 gezeigt. Der Auslaß 29 des Lagerzapfens 22 dient hierbei als Sprühdüse.

Die Fig. 3 zeigt in gestrichelter Darstellung den geöffneten Zustand der Messerträger 7a, 7b, während die durchgezogenen Linien einen geschlossenen Zustand zeigen.

In Fig. 5 wurde der Einfachheit halber darauf verzichtet, die Lichtschranke sowie die Messereinheit darzustellen.

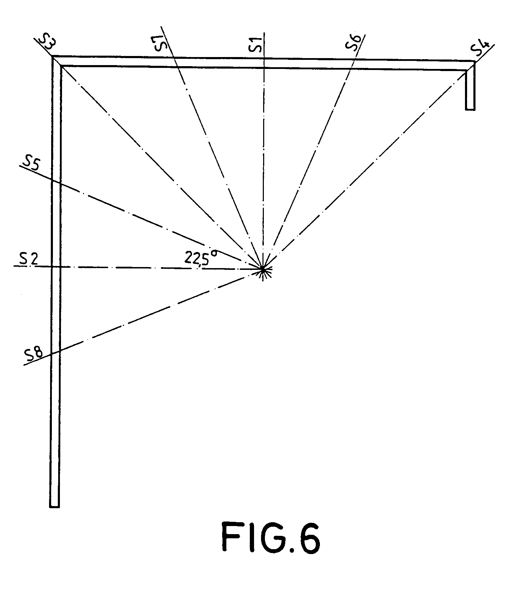

In Fig. 6 ist gezeigt, daß die Schnittebenen S1 bis S8 aufeinanderfolgender Messer zueinander versetzt sind, um zu einer gleichmäßigen Bearbeitung des Spargels 1 an seinem gesamten Umfang zu führen.

Durch die in Fig. 6 gezeigten unterschiedlichen Einbaulagen der Messereinheiten 3 ergeben sich unterschiedlich resultierende Gewichtsfkräfte, welche auf die Messerträger 7 wirken. Um ein einheitliches Schälergebnis zu erhalten, ist es besonders günstig, wenn die Andruckkraft der pneumatischen Kolben/Zylindereinheit 27 des zweiten Antriebes 9 jeder Messereinheit 3 separat hinsichtlich des wirksamen Drucks einstellbar ist. Der Druck kann an den einzelnen Messereinheiten 3 unterschiedlich eingestellt werden. Dies erfolgt durch Differenzdruckregelventile, welche jeweils einzeln einstellbar sind. Durch eine kollektive Verstellmöglichkeit der einzelnen Differenzdruckregelventile kann der Schneiddruck aller Messereinheiten 3 kollektiv verstellt werden, um die Schälwirkung der gesamten Vorrichtung anpassen zu können. Die einzelnen Differenzdruckregelventile werden bei der Grundeinstellung der Vorrichtung einjustiert, eine einzelne Verstellung ist während des Betriebs der Vorrichtung nicht notwendig.

Durch die beschriebene Ausgestaltung der Messereinheit 3 ist es möglich, durch den zweiten Antrieb 9 jeweils für sämtliche Messereinheiten 3 der gesamten Vorrichtung einen gleichen Schneiddruck einzustellen. Dieser kann entsprechend für alle Bearbeitungsstationen in gleicher Weise geändert werden, beispielsweise um die Dicke der abzuschälenden Schale einzustellen.

Die Fig. 1 zeigt weiterhin in der linken Hälfte schematisch dargestellt ein Prallblech 30, welches mit einer im einzelnen nicht gezeigten Öffnung versehen ist. Durch das Prallblech 30 werden die Spargelschalen zurückgehalten, es wird verhindert, daß Spargelschalen von der vorangehenden Messereinheit 3 in die nachfolgende Transportwalze gelangen.

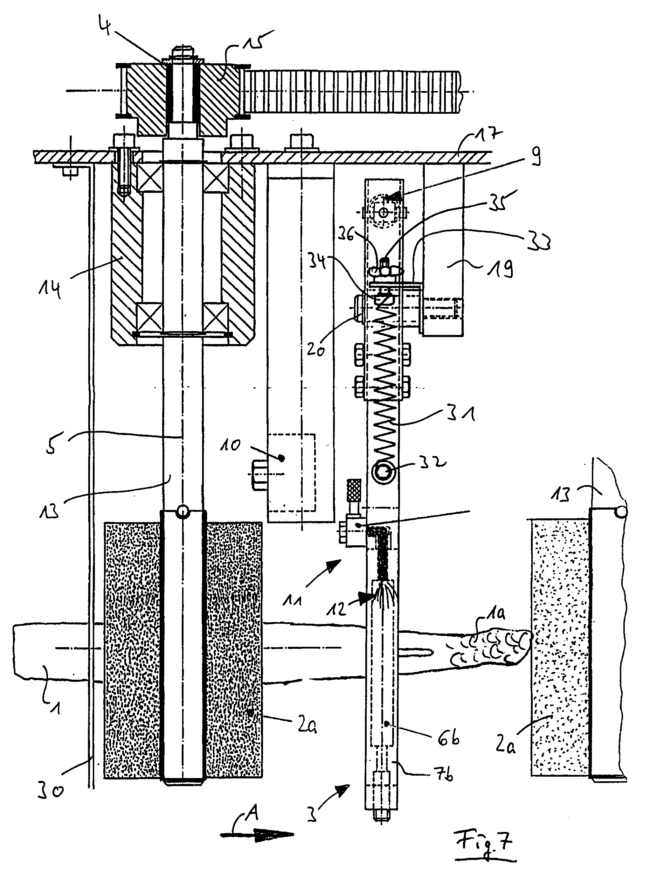

Die Fig. 7 zeigt eine abgewandelte Ausgestaltungsform der Messereinheit. Im übrigen sind bei dieser Ausgestaltungsform gleiche Teile mit gleiche Bezugsziffern versehen, so daß auf eine nochmalige detaillierte Beschreibung verzichtet werden kann.

Im Vergleich zu der in Fig. 7 gezeigten Ausgestaltungsform erfolgt das Öffnen bzw. Schließen der Messer nicht über einen Keil und zugeordnete Federn, sondern es werden die Messerträger 7a, 7b über eine Feder geöffnet, während die Schließbewegung der Messerträger 7a, 7b über eine KolbenZylindereinheit erfolgt. Im einzelnen sind bei dem in Fig. 7 gezeigten Ausführungsbeispiel zwei seitliche Federn 31 vorgesehen, welche mit ihrem einen Ende über ein Befestigungselement 32 direkt mit dem jeweiligen Messerträger 7a, 7b verbunden sind, während das freie, obere Ende der Federn 31 verstellbar mittels eines Winkelträgers 33 an dem Träger 19 gelagert ist. Im einzelnen ist das Ende der Feder an einen Schraubenkopf 34 einer Schraube 35 eingehängt, welche verstellbar in dem Winkelträger 33 geführt ist und mittels einer Mutter 36 lage-gesichert werden kann. Durch die Längenverstellung der Schraube 35 kann die Federkraft der Feder 31 einjustiert werden, so daß die Lage der Messerträger 7a bzw. 7b einzeln einstellbar ist. Durch Einstellung der Federn 31 ist es somit möglich, einen vorgegebenen, einheitlichen Schäldruck der Messer 6a, 6b einzustellen, ohne daß durch diese Einstellung der pneumatische Druck verändert werden müßte. Der Andruck der Messer 6a, 6b wird weiterhin mittels des zweiten Antriebs 9 bewirkt. Bei der in Fig. 7 gezeigten Ausgestaltung ergibt sich der Vorteil, daß der Schließvorgang weicher erfolgt, da er gegen die Kraft der Federn 31 durchgeführt wird. Weiterhin lassen sich die einzelnen Schälstationen bzw. Messereinheiten 3 weiter öffnen. Zusätzlich ist eine genauere Justierung der Messer 6a, 6b zur Durchlaufmitte des zu bearbeitenden Produktes möglich. Weiterhin besteht die Möglichkeit, die vorderen und hinteren Messereinheite 3 mit unterschiedlich großem Anpreßdruck der Messer einzustellen.

Im folgenden wird die Funktionsweise der erfindungsgemäßen Vorrichtung beschrieben:

Es wird, beispielsweise manuell, ein Spargel 1 in das erste Transportwalzenpaar eingeführt. Nach dem der Kopf 1a des Spargels 1 das Transportwalzenpaar verlassen hat, gelangt er in den Bereich der Lichtschranke 10. In Abhängigkeit der eingestellten Verzögerung wird nunmehr der erste Antrieb 8 der nachgeordneten Messereinheit 3 betätigt, um das Messerträgerpaar 7a, 7b zu schließen. Die Verzögerung ist so gewählt, daß zu diesem Zeitpunkt der Kopf 1a des Spargels 1, wie in Fig. 1 gezeigt, das Messerträgerpaar 7 bereits passiert hat. Hierdurch wird verhindert, daß der Kopf 1a beschädigt wird.

Nachfolgend gelangt der Kopf 1a des Spargels 1 in das zweite, in Fig. 1 auf der rechten Seite nur teilweise dargestellte Transportwalzenpaar 2. Hierdurch wird der Spargel, wie in Fig. 2 gezeigt, gleichzeitig von zwei Transportwalzenpaaren 2 gegriffen. Da die Transportwalzen 2 jeweils mit der gleichen Umfangsgeschwindigkeit angetrieben werden, ergeben sich, bedingt durch die unterschiedliche Dicke des Spargels im Kopfbereich bzw. in seinem Endbereich unterschiedliche Fördergeschwindigkeiten. Diese würden dazu führen, daß das in Fig. 2 rechts dargestellte Transportwalzenpaar den Spargel - bedingt durch den größeren wirksamen Radius der Transportwalze - schneller transportiert als das in der linken Seite der Fig. 2 gezeigte Transportwalzenpaar. Hierdurch würde die Gefahr eines Bruchs des Spargelkopfes bestehen. Durch den erfindungsgemäß vorgesehenen Freilauf werden nun die - in Fig. 2 linken - Walzen etwas beschleunigt, so daß der Spargel 1 gleichmäßig transportiert wird.

Nach dem das Ende des Spargels 1 die Lichtschranke 10 passiert hat, wird der Messerträger 7 der Messereinheit 3 wieder geöffnet.

Während des gesamten Bearbeitungsvorganges wird Wasser durch die Sprüheinrichtung 11 der Düse 12 zugeführt, um die Messer 6 von möglicherweise anhaftenden Spargelschalen zu befreien.

Sowohl der Zeitpunkt der Öffnung des Messerträgers als auch der Zeitpunkt des Schließens des Messerträgers sind jeweils einstellbar.

Durch die erfindungsgemäße Vorrichtung können 1800 bis 2000 Spargelstangen pro Stunde problemlos bearbeitet werden, eine derartige Leistung ermöglicht keine der aus dem Stand der Technik bekannten Vorrichtungen.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten. Es ist insbesondere darauf hinzuweisen, daß die Erfindung nicht auf das Schälen von Spargel beschränkt ist, sondern vielmehr können auch ähnliche Früchte, Gemüse etc. bearbeitet werden. Weiterhin können die einzelnen Komponenten entsprechend angepaßt werden. So ist es möglich, die Transportwalzen nicht zylindrisch auszubilden, sondern mit einer mittigen Nut zu versehen. Die Messer können gewölbt oder gebogen ausgebildet sein.

Zusammenfassend ist folgendes festzustellen:

Die Erfindung bezieht sich auf eine Vorrichtung zum Schälen von Spargel (1) mit zumindest zwei Walzenpaaren (2) zum Transport des Spargels (1) und einer zwischen den Walzenpaaren (2) angeordneten Messereinheit (3), dadurch gekennzeichnet, daß der Antrieb jedes Transportwalzenpaares (2) mit einem Freilauf (4) versehen ist. (Fig. 1).

## Patentansprüche

1. Vorrichtung zum schälen von länglichen, pflanzlichen und/oder landwirtschaftlichen Produkten (1) mit zumindest zwei angetriebenen Walzenpaaren (2) zum Transport des Produkts (1) und einer zwischen den Walzenpaaren (2) angeordneten Messereinheit (3), dadurch gekennzeichnet, daß der Antrieb jedes Transportwalzenpaares (2) mit einem Freilauf (4) versehen ist.

2. Vorrichtung nach Anspruch 1, dadurch gekennzeichnet, daß jede Transportwalze (2a, 2b) mit einem eigenen Freilauf (4) versehen ist.

3. Vorrichtung nach Anspruch 1 oder 2, dadurch gekennzeichnet, daß die beiden Transportwalzen (2a, 2b) jedes Walzenpaares (2) mit derselben Drehgeschwindigkeit antreibbar sind.

4. Vorrichtung nach einem der Ansprüche 1 bis 3, dadurch gekennzeichnet, daß die Transportwalzen (2a, 2b) aller Walzenpaare (2) mit derselben Drehgeschwindigkeit angetrieben werden.

5. Vorrichtung nach einem der Ansprüche 1 bis 4, dadurch gekennzeichnet, daß mehrere Transportwalzenpaare (2) mit zwischen diesen angeordneten Messereinheiten (3) vorgesehen sind.

6. Vorrichtung nach einem der Ansprüche 1 bis 5, dadurch gekennzeichnet, daß die Drehachsen (5a, 5b) der Transportwalzen (2a, 2b) jeweils parallel zueinander angeordnet sind.

7. Vorrichtung nach einem der Ansprüche 1 bis 6, dadurch gekennzeichnet, daß die Transportwalzen (2a, 2b) aus einem weichen, elastischen Material gefertigt sind.

8. Vorrichtung nach einem der Ansprüche 1 bis 7, dadurch gekennzeichnet, daß die Messereinheit (3) jeweils zwei im wesentlichen gerade, in ihrem gegenseitigen Abstand einstellbare Messer (6a, 6b) umfaßt.

9. Vorrichtung nach Anspruch 8, dadurch gekennzeichnet, daß die Messer (6a, 6b) auf zwei gegenüberliegenden, scherenartig bewegbaren Messerträgern (7a, 7b) gelagert sind.

10. Vorrichtung nach Anspruch 8 oder 9, dadurch gekennzeichnet, daß die Mittelebenen (S1 - S8) der Messer (6a, 6b) in aufeinanderfolgenden Messereinheiten (3) winkelmäßig zueinander versetzt sind.

11. Vorrichtung nach Anspruch 10, dadurch gekennzeichnet, daß acht Messereinheiten (3) vorgesehen sind, welche um jeweils 22,5° versetzt sind.

12. Vorrichtung nach Anspruch 9 bis 11, dadurch gekennzeichnet, daß die Messerträger (7a, 7b) jeweils mit einer Betätigungseinheit versehen sind.

13. Vorrichtung nach Anspruch 12, dadurch gekennzeichnet, daß die Betätigungseinheit pneumatisch betätigbar ist.

14. Vorrichtung nach einem der Ansprüche 12 oder 13, dadurch gekennzeichnet, daß die Betätigungseinheit einen ersten Antrieb (8) zum Öffnen/Schließen des Messerträgerpaares (7a, 7b) und einen zweiten, unabhängigen Antrieb (9) zur Einstellung der Schnittkraft umfaßt.

15. Vorrichtung nach Anspruch 14, dadurch gekennzeichnet, daß der zweite Antrieb (9) als wegunabhängige Feder wirkt.

16. Vorrichtung nach einem der Ansprüche 1 bis 15, dadurch gekennzeichnet, daß das Messerträgerpaar (7a, 7b) um eine parallel zur Durchlaufachse des Produkts (1) angeordnete Achse schwenkbar ist.

17. Vorrichtung nach einem der Ansprüche 1 bis 16, dadurch gekennzeichnet, daß - in Durchlaufrichtung des Produkts (1) - vor der Messereinheit (3) eine Lichtschranke (10) angeordnet ist.

18. Vorrichtung nach Anspruch 17, dadurch gekennzeichnet, daß die Lichtschranke (10) Signale zum Öffnen/Schließen des Messerträgerpaares (7a, 7b) abgibt.

19. Vorrichtung nach einem der Ansprüche 1 bis 18, dadurch gekennzeichnet, daß - in Durchlaufrichtung des Produkts (1) - nach jeder Messereinheit (3) ein mit einer Ausnehmung zur Durchführung des Produkts (1) versehenes Prallblech (30) angeordnet ist.

20. Vorrichtung nach einem der Ansprüche 1 bis 19, dadurch gekennzeichnet, daß die Messereinheit (3) mit einer Spüleinrichtung (11) versehen ist.

21. Vorrichtung nach einem der Ansprüche 9 bis 20, dadurch gekennzeichnet, daß die Spüleinrichtung (11) zumindest eine an dem Messerträger (7a, 7b) angeordnete, das Messer (6a, 6b) in dessen Längsrichtung beaufschlagende Düse (12) umfaßt.

22. Vorrichtung nach Anspruch 21, dadurch gekennzeichnet, daß die Düse (12) in einen Lagerzapfen (22) des Messers (6a, 6b) integriert ist.

23. Vorrichtung nach Ansprüche 21, dadurch gekennzeichnet, daß die Spüleinrichtung (11) zum Durchleiten von Wasser ausgebildet ist.

## Claims

1. Device for peeling elongated, vegetative and/or agricultural products (1) having at least two driven pairs of rollers (2) for transportation of the product (1) and a cutter unit (3) arranged between the pair of rollers (2) characterized in that the drive of each pair of transportation rollers (2) is provided with a free running (4).

2. Device according to claim 1, characterized in that each transportation roller (2a, 2b) is provided with a separate free running (4).

3. Device according to claim 1 or 2, characterized in that the two transportation rollers (2a, 2b) of each pair of rollers (2) can be driven at the same rotating speed.

4. Device according to any of claims 1 to 3, characterized in that the transportation rollers (2a, 2b) of all pairs of rollers (2) are driven at the same rotating speed.

5. Device according to any of claims 1 to 4, characterized in that a plurality of transportation rollers (2) is provided with cutter units (3) arranged between them.

6. Device according to any of claims 1 to 5, characterized in that the rotation axes (5a, 5b) of the transportation rollers (2a, 2b) are arranged in parallel, respectively.

7. Device according to any of claims 1 to 6, characterized in that the transportation rollers (2a, 2b) are made of a soft, elastic material.

8. Device according to any of claims 1 to 7, characterized in that each cutter unit (3) comprises two basically straight cutters (6a, 6b) being adjustable in their mutual distance.

9. Device according to claim 8, characterized in that the cutters (6a, 6b) are supported on two opposite cutter supports (7a, 7b) being movable like scissors.

10. Device according to claim 8 or 9, characterized in that the center plains (S1 - S8) of the cutters (6a, 6b) of successive cutter units (3) are displaced to each other in an angular manner.

11. Device according to claim 10, characterized in that eight cutter units (3) are provided, each of which is displaced by 22,5°.

12. Device according to claims 9 to 11, characterized in that each of the cutter supports (7a, 7b) is provided with an operating unit.

13. Device according to claim 12, characterized in that the operating unit can be operated pneumatically.

14. Device according to any of claims 12 or 13, characterized in that the operating unit comprises a first drive (8) for the opening/closing of the pair of cutter supports (7a, 7b) and a second independent drive (9) for adjustment of the cutting force.

15. Device according to claim 14, characterized in that the second drive (9) acts like an excursion-independent spring.

16. Device according to any of claims 1 to 15, characterized in that the pair of cutter supports (7a, 7b) is provided swivelling around an axis arranged in parallel to the axis of travel of the product (1).

17. Device according to any of claims 1 to 16, characterized in that a light barrier (10) is arranged - in direction of travel of the product (1) - in front of the cutter unit (3).

18. Device according to claim 17, characterized in that the light barrier (10) outputs signals for opening/closing of the pair of cutter supports (7a, 7b).

19. Device according to any of claims 1 to 18, characterized in that an impact plate (30) having a recess for passing through the product (1) is arranged - in direction of travel of the product (1) - behind each cutter unit (3).

20. Device according to any of claims 1 to 19, characterized in that the cutter unit (3) is provided with a washing device (11).

21. Device according to any of claims 9 to 20, characterized in that the washing device (11) comprises at least a nozzle (12) arranged at the cutter support (7a, 7b) feeding the cutter (6a, 6b) in longitudinal direction thereof.

22. Device according to claim 21, characterized in that the nozzle (12) is integrated in a bearing journal (22) of the cutter (6a, 6b).

23. Device according to claim 21, characterized in that the washing device (11) is adapted for leading through water.

## Revendications

1. Dispositif pour peler des produits végétaux et/ou agricoles allongés (1) avec au moins deux paires de cylindres entraînés (2) pour le transport du produit (1) et une unité à lames (3) disposée entre les paires de cylindre (2), caractérisé en ce que l'entraînement de chaque paire de cylindres (2) est muni d'un axe libre (4).

2. Dispositif selon la revendication 1, caractérisé en ce que chaque cylindre de transport (2a, 2b) est muni d'un axe libre (4) propre à lui-même.

3. Dispositif selon l'une des revendications 1 ou 2, caractérisé en ce que les deux cylindres de transport (2a, 2b) de chaque paire de cylindres (2) peuvent être entraînés à la même vitesse de rotation.

4. Dispositif selon l'une des revendications 1 à 3, caractérisé en ce que les cylindres de transport (2a, 2b) de toutes les paires de cylindres (2) peuvent être entraînés à la même vitesse de rotation.

5. Dispositif selon l'une des revendications 1 à 4, caractérisé en ce que plusieurs paires de cylindres de transport (2) sont prévues avec des unités à lames (3) disposées entre elles.

6. Dispositif selon l'une des revendications 1 à 5, caractérisé en ce que les axes de rotation (5a, 5b) des cylindres de transport (2a, 2b) sont dans chaque cas disposés parallèlement les uns aux autres.

7. Dispositif selon l'une des revendications 1 à 6, caractérisé en ce que les cylindres de transport (2a, 2b) sont fabriqués à partir d'une matière souple élastique.

8. Dispositif selon l'une des revendications 1 à 7, caractérisé en ce que l'unité à lames (3) comprend dans chaque cas deux lames (6a, 6b) essentiellement droites, leur distance mutuelle étant ajustable.

9. Dispositif selon la revendication 8, caractérisé en ce que les lames (6a, 6b) sont montées sur deux supports de lames (7a, 7b) superposés mobiles de manière analogue à des ciseaux.

10. Dispositif selon l'une des revendications 8 ou 9, caractérisé en ce que les plans médians (S1 à S8) des lames (6a, 6b) dans les unités à lames (3) consécutives sont décalés selon un angle, les uns par rapport aux autres.

11. Dispositif selon la revendication 10, caractérisé en ce que huit unités à lames (3) sont prévues, ces unités étant décalées dans chaque cas de 22,5°.

12. Dispositif selon l'une des revendications 9 à 11, caractérisé en ce que les supports de lame (7a, 7b) sont munis dans chaque cas d'une unité d'actionnement.

13. Dispositif selon la revendication 12, caractérisé en ce que l'unité d'actionnement est actionnée de façon pneumatique.

14. Dispositif selon l'une des revendications 12 ou 13, caractérisé en ce que l'unité d'actionnement comprend un premier entraînement (8) pour ouvrir/fermer la paire d'unités à lames (7a, 7b) et un deuxième entraînement indépendant (9) pour ajuster l'effort de coupe.

15. Dispositif selon la revendication 14, caractérisé en ce que le deuxième entraînement (9) agit comme un ressort indépendant du parcours.

16. Dispositif selon l'une des revendications 1 à 15, caractérisé en ce que la paire de supports de lame (7a, 7b) est orientable selon un axe disposé parallèlement à l'axe de passage du produit (1).

17. Dispositif selon l'une des revendications 1 à 16, caractérisé en ce qu'un barrage photoélectrique (10) est disposé devant l'unité à lames (3) dans la direction de passage du produit (1).

18. Dispositif selon la revendication 17, caractérisé en ce que le barrage photoélectrique (10) émet des signaux pour ouvrir/fermer la paire de supports de lame (7a, 7b).

19. Dispositif selon l'une des revendications 1 à 18, caractérisé en ce qu'une tôle élastique (30) pourvue d'une ouverture pour faire passer le produit (1) est disposée après chaque unité à lames (3) dans la direction de passage du produit (1).

20. Dispositif selon l'une des revendications 1 à 19, caractérisé en ce que l'unité à lames (3) est munie d'un dispositif de rinçage (11).

21. Dispositif selon l'une des revendications 9 à 20, caractérisé en ce que le dispositif de rinçage (11) comprend au moins une buse (12) disposée au niveau du support de lame (7a, 7b), rencontrant la lame (6a, 6b) dans sa direction longitudinale.

22. Dispositif selon la revendication 21, caractérisé en ce que la buse (12) est intégrée dans un goujon (22) de la lame (6a, 6b).

23. Dispositif selon la revendication 21, caractérisé en ce que le dispositif de rinçage (11) est formé en vue d'acheminer de l'eau.
